# EUROPÄISCHE PATENTANMELDUNG

(11) **EP 1 264 935 A2**
(43) Veröffentlichungstag der Anmeldung: **11.12.2002**
(21) Anmeldenummer: 02010032.7
(22) Anmeldetag: 06.05.2002
(51) Int. Cl.: E01C 23/082, G05D 1/02

(54) **Abziehvorrichtung für den Boden einer Tennisanlage sowie Ladestation für eine Abziehvorrichtung**

(30) Priorität: 09.06.2001 DE 10128085
(71) Anmelder: Miller, Hans, 88471 Laupheim (DE)
(72) Erfinder: Miller, Hans, 88471 Laupheim (DE)
(74) Vertreter: Ostertag, Ulrich, Dr.

(57) **Zusammenfassung**

Eine Abziehvorrichtung für den Boden einer Tennisanlage weist eine Abzieheinrichtung (13) mit einem während des Abziehvorgangs über den Boden schleifenden Abziehkörper (13) auf. Eine Antriebseinrichtung (1, 2) wirkt zum Fortbewegen der Abziehvorrichtung auf mit dem Boden zusammenwirkende Fortbewegungsmittel (9). Sie arbeitet mit einer Steuereinrichtung (4) zur Vorgabe des Abziehwegs zusammen. Die Fortbewegungsmittel (9) weisen mindestens zwei quer zur Fortbewegungsrichtung versetzt angeordnete, mit unterschiedlicher Drehzahl antreibbare Räder (9) auf. Die Abziehvorrichtung kann mit der Antriebseinrichtung (1, 2) gelenkt werden. Auf einen separaten Lenkmotor und eine Lenkmechanik kann verzichtet werden.

## Beschreibung

Die Erfindung betrifft eine Abziehvorrichtung für den Boden einer Tennisanlage mit einer Abzieheinrichtung mit einem während des Abziehvorgangs über den Boden schleifenden Abziehkörper; mit einer Antriebseinrichtung, die zum Fortbewegen der Abziehvorrichtung auf mit dem Boden zusammenwirkende Fortbewegungsmittel wirkt, wobei die Antriebseinrichtung mit einer Steuereinrichtung zur Vorgabe des Abziehwegs zusammenarbeitet.

Ferner betrifft die vorliegende Erfindung eine Ladestation für eine Abziehvorrichtung.

Eine Abziehvorrichtung der eingangs genannten Art ist aus der DE 196 32 456 C1 bekannt. Dort weist die Antriebsvorrichtung vier Räder, einen Antriebs- und einen Lenkmotor auf. Letzter wirkt auf alle vier Räder. Ein derartiger lenkbarer Antrieb ist in der Konstruktion aufwendig und damit teuer.

Es ist daher die Aufgabe der vorliegenden Erfindung, eine Abziehvorrichtung der eingangs genannten Art derart weiterzubilden, daß sie einfacher gelenkt antreibbar ist.

Diese Aufgabe ist erfindungsgemäß dadurch gelöst, daß die Fortbewegungsmittel mindestens zwei quer zur Fortbewegungsrichtung versetzt angeordnete, mit unterschiedlicher Drehzahl antreibbare Räder aufweisen.

Bei den erfindungsgemäß angetriebenen Rädern, die entweder die Fortbewegungsmittel selbst oder, z.B. bei einer Antriebskettenanordnung, Bestandteile derselben sind, ist eine Lenkung mit der Antriebseinrichtung möglich, so daß auf einen separaten Lenkmotor und eine Lenkmechanik verzichtet werden kann. Gelenkt wird über die unterschiedlichen Drehzahlen der Antriebsräder. Dies ist insbesondere dann von Vorteil, wenn die Abziehvorrichtung einachsig ausgeführt ist und sich über den vor- oder nachlaufenden Abziehkörper abstützt.

Bevorzugt ist eine mit der Steuereinrichtung zusammenarbeitende Positionsbestimmungseinrichtung vorgesehen, die eine Richtungsbestimmungseinrichtung für die Fortbewegungsrichtung der Abziehvorrichtung aufweist. Eine derartige in die Abziehvorrichtung integrierte Positionsbestimmung erfordert keine Wechselwirkung mit externen, z.B. in der Tennisanlage untergebrachten, Komponenten, so daß die Abziehvorrichtung auch auf nicht speziell vorbereiteten Tennisanlagen eingesetzt werden kann. Mit Hilfe der Positionsbestimmungseinrichtung lassen sich praktisch beliebige vorgegebene Abziehwege abfahren, je nach den Gegebenheiten der Tennisanlage.

Die Positionsbestimmungseinrichtung kann ferner eine mit der sich während dem Fortbewegen drehenden Komponente zusammenarbeitende Wegstreckenmeßeinrichtung aufweisen. Dies schafft eine relativ kostengünstige Positionsbestimmung mit einer in der Regel ausreichenden Präzision der Positionsbestimmung. Hierbei wird ausgenutzt, daß die Relativbewegung der Abziehvorrichtung zum Boden der Tennisanlage auf einfache Weise in eine Drehbewegung einer Komponente umgesetzt werden kann. Die Wegstreckenmessung wird dann beispielsweise durch Messung der Anzahl der Umdrehungen dieser Komponente realisiert.

Die Wegstreckenmeßeinrichtung kann mindestens einen induktiven Impulsgeber aufweisen. Derartige Impulsgeber sind z. B. in Verbindung mit Radcomputern bekannt und erlauben eine kostengünstige und präzise Wegstreckenmessung.

Die sich während dem Fortbewegen drehende Komponente kann ein nicht angetriebenes Laufrad sein. Prinzipiell läßt sich die aus der DE 196 32 456 C1 bekannte Abziehvorrichtung erfindungsgemäß umrüsten, indem ein Antriebsrad mit einer erfindungsgemäßen Wegstreckenmeßeinrichtung ausgerüstet wird. Da bei Antriebsrädern jedoch ein die Wegstreckenmessung verfälschender Schlupf auftreten kann, ist es vorteilhafter, ein nicht angetriebenes, mitlaufendes Laufrad zur Wegstreckenmessung einzusetzen.

Die Wegstreckenmeßeinrichtung kann zwischen den Rädern, vorzugsweise mittig zwischen diesen angeordnet sein.
In diesem Positionsbereich ist der Einfluß einer Kurvenfahrt auf die von der Wegstreckenmeßeinrichtung gemessene Wegstrecke am geringsten.

Alternativ zu einem nicht angetriebenen Laufrad kann die sich während dem Fortbewegen drehende Komponente der Wegstreckenmeßeinrichtung ein Bauteil der Antriebseinrichtung und/oder der Fortbewegungsmittel sein. Die Komponente verbindet dann die Funktionen "Antrieb" bzw. "Fortbewegung" mit der Funktion "Wegstreckenmessung".

Die Wegstreckenmeßeinrichtung kann derart ausgeführt sein, daß sie Signale, die den Umdrehungen von mindestens zwei Rädern entsprechen, zur Wegstreckenmessung verarbeitet. Dies ermöglicht auf relativ einfache Weise die Berücksichtigung der Tatsache, daß bei einer Kurvenfahrt der Abziehvorrichtung die anhand der Umdrehung eines Rades gemessene Wegstrecke davon abhängt, ob es sich um ein kurveninneres oder kurvenäußeres Rad handelt. Anhand eines Vergleichs der Umdrehungszahlen mindestens zweier Räder läßt sich in Verbindung mit der Kenntnis der Anordnung der Räder der Abziehvorrichtung eine präzise Wegstreckenmessung realisieren.

Die Antriebseinrichtung kann mindestens eine drehfest angeordnete Welle aufweisen, um die sich ein Läufer dreht. Eine derartige Ausgestaltung der Antriebseinrichtung führt zu einem besonders einfachen konstruktiven Aufbau.

Bevorzugt weisen die Räder separate Antriebseinrichtungen auf. Bei einer solchen Ausführungsform läßt sich die Abziehvorrichtung über die unterschiedlichen Drehzahlen der Antriebsräder steuern, wobei kein Getriebe erforderlich ist, um die unterschiedlichen Drehzahlen vorzugeben.

Bevorzugt weist die Abziehvorrichtung Abstandssensoren zur Detektion von Hindernissen bzw. von stationären Gegenständen auf. Derartige Abstandssensoren erhöhen die Sicherheit der Abziehvorrichtung.

Die Abstandssensoren können mit der Steuereinrichtung in Signalverbindung stehen. Mit derartigen Abstandssensoren lassen sich im Verlauf des Abziehwegs Kontrollmessungen durchführen, in wie weit die Abziehvorrichtung sich noch korrekt in Position befindet. Das Ergebnis dieser Kontrollmessungen kann zum Initialisieren oder Korrigieren des Abziehwegs verwendet werden.

Die Abstandssensoren können als Ultraschall-Sensoren ausgeführt sein. Derartige Sensoren sind präzise und relativ kostengünstig.

Die Richtungsbestimmungseinrichtung kann alternativ z.B. als Faserkreisel, Drehratensensor oder als mikromechanischer Kreisel ausgeführt sein. Derartige Richtungsbestimmungseinrichtungen sind ausreichend präzise in der Positionsbestimmung.

Bevorzugt ist eine Verriegelungseinrichtung der Abziehvorrichtung in einer Parkposition vorgesehen. Die Abziehvorrichtung kann dann unbeaufsichtigt bis zum nächsten Gebrauch in der Parkposition verbleiben.

Bevorzugt besteht der Abziehkörper aus einem flexiblen Material und ist mit einem Stützrahmen verbunden. Ein flexibler Abziehkörper weist eine gute Abziehwirkung auf. Der Stützrahmen gewährleistet hierbei die zum Abziehen notwendige Stabilität der Abzieheinrichtung.

Der Stützrahmen kann eine Halteeinrichtung für den Abziehkörper im Bereich des von der Antriebseinrichtung entfernten Endbereichs des Stützrahmens bzw. eines Abschnitts hiervon aufweisen. Dies gewährleistet, daß der Abziehkörper sich gegen den Stützrahmen während der Fortbewegung beim Abziehen nicht unerwünscht quer verschiebt.

Die Halteeinrichtung kann so ausgeführt sein, daß sie gleichzeitig als Stütze in der Abziehposition dient. Eine derartige Stütze gibt eine definierte Lage des Abziehkörpers beim Abziehen vor. Die Verbindung dieser beiden Funktionen führt zu einer einfachen Konstruktion der Abziehvorrichtung.

Die Antriebseinrichtung kann mindestens zwei Elektromotoren aufweisen. Derartige Motoren eignen sich besonders gut zum autarken Betrieb.

Bevorzugt weist die Abziehvorrichtung eine Batterie zum Speisen der Elektromotoren auf. In diesem Fall kann auf Schleppkabel verzichtet werden, was die Flexibilität des Einsatzes der Abziehvorrichtung erhöht.

Eine weitere Aufgabe der Erfindung ist es, eine Ladestation anzugeben, die mit der erfindungsgemäßen batteriebetriebenen Abziehvorrichtung zusammenwirkt.

Diese Aufgabe ist erfindungsgemäß gelöst durch eine Ladestation gemäß Anspruch 33.

Eine derartige Ladestation kann im Bereich der Tennisanlage aufgestellt sein, so daß die Abziehvorrichtung in der Parkposition gleichzeitig geladen werden kann und somit immer funktionsfähig ist.

Die Ladestation kann eine Verriegelungseinrichtung für die Abziehvorrichtung in einer Ladeposition aufweisen. Die Ladestation dient in dieser Weise gleichzeitig als Diebstahlsicherung.

Ein Ausführungsbeispiel der Erfindung wird nachfolgend anhand der Zeichnung näher erläutert; es zeigen:
- Figur 1: eine teilweise nicht sichtbare Details zeigende Aufsicht auf eine erfindungsgemäße Abziehvorrichtung in einer Abziehposition;
- Figur 2: eine Seitenansicht der Abziehvorrichtung von Figur 1;
- Figur 3: eine Ausschnittsvergrößerung der Seitenansicht von Figur 2, die zu Erläuterungszwecken den Blick auf normalerweise verdeckte Komponenten eines Verstellmechanismus zwischen der Abziehposition und einer Parkposition freigibt, und in der andere Komponenten des Verstellmechanismus, die normalerweise sichtbar sind, weggelassen sind;
- Figur 4: eine Seitenansicht der Abziehvorrichtung von Fig. 1 in einer Position zwischen der Abziehposition und der Parkposition, die zu Erläuterungszwecken den Blick auf normalerweise verdeckte Komponenten des Verstellmechanismus freigibt, und in der andere Komponenten, die normalerweise sichtbar sind, weggelassen sind;
- Figur 5: eine zu Figur 4 analoge Seitenansicht, in der der Blick auf Komponenten des Verstellmechanismus freigegeben ist, die in einer Ebene liegen, die vor der in Figur 4 sichtbaren Ebene angeordnet sind;
- Figur 6: die Abziehvorrichtung mit einer Ladestation in einer Ladeposition, die gleichzeitig die Parkposition darstellt;
- Figur 7: eine Aufsicht auf einen Tennisplatz mit einem angedeuteten Abziehweg der Abziehvorrichtung.

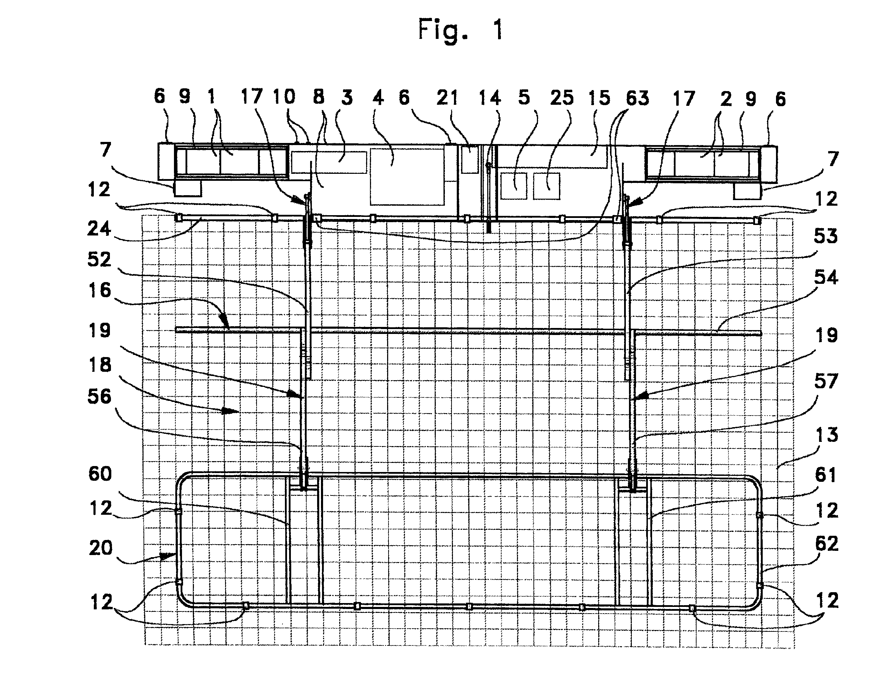

Die in Figur 1 in Aufsicht in einer Abziehposition dargestellte Abziehvorrichtung weist eine Abzieheinrichtung mit einem als flexibles Netz 13 ausgebildeten Abziehkörper auf, mit dem der Boden einer Tennisanlage zur Aufbereitung bzw. Verteilung der dort befindlichen Sand- bzw. Granulatkörner abgezogen werden kann. Das Netz 13 wird zum Abziehen mittels Antriebseinrichtungen 1, 2 fortbewegt, die zusammen mit weiteren, noch zu beschreibenden Komponenten in bzw. an einem Gehäuse 8 angebracht sind. Diese Komponenten sind zu Erläuterungszwecken in Fig. 1 dargestellt, obwohl sie in der gezeigten Aufsicht nicht alle sichtbar sind.

Die Fortbewegungsrichtung der Abziehvorrichtung ist derart, daß das Gehäuse 8 führt und die sonstigen, noch zu beschreibenden Bauteile der Abziehvorrichtung hinter sich herzieht.

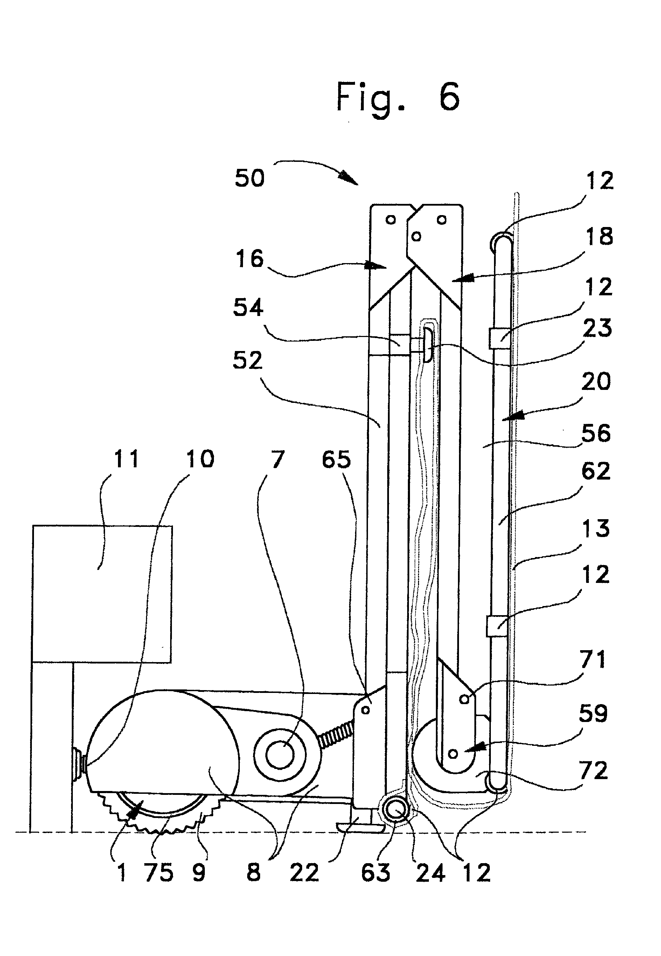

Die Antriebseinrichtungen 1, 2 sind in Figur 1 schematisch dargestellt und weisen jeweils einen Elektromotor auf, der als Läufer 75 (vgl. z. B. Figur 6) um eine stationäre Welle (nicht dargestellt) ausgeführt ist. Die Läufer 75 dienen als Antriebsräder und sind von einem Profilmantel 9 aus einem Kautschukgemisch umgeben, welches eine gute Traktion auf dem Boden gewährleistet.

Als Energiequelle für die Antriebseinrichtungen 1, 2 sowie für eine noch zu beschreibende Antriebsscheibe 15 dient eine Batterie 3, die im Gehäuse untergebracht ist. Ladekontake 10 für die Batterie 3 sind durch eine Wand des Gehäuses 8 nach außen geführt, wie z. B. in Figur 6 gezeigt.

Ebenfalls im Gehäuse untergebracht ist eine Ladeelektronik 25, die zur Steuerung des Ladevorgangs der Batterie 3 und insbesondere zur Überwachung der Ladetemperatur dient. Hierzu weist sie einen Temperaturfühler auf, der in thermischem Kontakt mit der Batterie steht.

Die beiden Antriebseinrichtungen 1, 2 sind im Bereich der gegenüberliegenden Enden des senkrecht zur Fortbewegungsrichtung langgestreckten Gehäuses 8 angeordnet. Beide Elektromotoren werden unabhängig von einer elektronischen Steuerung 4 angesteuert, mit der sie über Signalleitungen (nicht dargestellt) in Verbindung stehen. Die Steuerung 4 weist einen programmierbaren Mikrochip auf.

Über weitere, nicht dargestellt Signalleitungen steht die Steuerung 4 mit einer als Faserkreisel 5 ausgeführten Richtungsbestimmungseinrichtung und einer Wegstreckenmeßeinrichtung 21 in Verbindung. Letztere umfaßt ein während des Abziehens auf dem Boden abrollendes Laufrad und einen mit diesem zusammenarbeitenden induktiven Impulsgeber.

Ferner steht die Steuerung 4 mit Ultraschall-Sensoren 6, 7 in Verbindung. Die Ultraschall-Sensoren 6, von denen einer in der Mitte und jeweils einer an einem der beiden Enden des Gehäuses 8 angeordnet ist, erfaßt Hindernisse bzw. stationäre Gegenstände in Fortbewegungsrichtung der Abziehvorrichtung. Zwei weitere Ultraschall-Sensoren 7, von denen ebenfalls jeweils einer an einem der beiden Enden des Gehäuses 8 angeordnet ist, erfaßt Hindernisse bzw. stationäre Gegenstände senkrecht zur Fortbewegungsrichtung der Abziehvorrichtung. Gleichzeitig wird mit den Ultraschall-Sensoren 6, 7 in noch zu beschreibender Weise kontrolliert, inwieweit die tatsächliche Position der Abziehvorrichtung mit einer vorgegebenen Position übereinstimmt.

Alternativ zu einem Netz können als Abziehkörper auch Matten, Besen oder dgl. eingesetzt werden.

Auch andere Fortbewegungsmittel wie die als Antriebsräder dienenden Läufer 75 sind möglich.

Nachfolgend wird bezugnehmend auf die Figuren 1 bis 6 die Abzieheinrichtung beschrieben, die von den Antriebseinrichtungen 1, 2 gezogen wird:

Das Netz 13 ist mit einem Stützrahmen verbunden, der insgesamt das Bezugszeichen 50 trägt. Zur Verbindung des Netzes 13 mit dem Stützrahmen 50 dient eine Halteeinrichtung in Form von Haltekörpern 23 und Klettverschlüssen 12 (vgl. Figuren 1 bis 6). Die Haltekörper 23 erstrecken sich vom Stützrahmen 50 in der Abziehposition in Richtung des Bodens nach unten. Sie weisen pilzkappenförmige Endabschnitte auf, über die Maschen des Netzes 13 gezogen sind.

Der Stützrahmen 50 hat in der Aufsicht der Figur 1 insgesamt eine rechteckige lichte Kontur. Im Bereich der den Stützrahmen 50 begrenzenden Seiten, die im wesentlichen senkrecht zur Fortbewegungsrichtung der Abziehvorrichtung angeordnet sind, ist das Netz 13 durch weitere Halteeinrichtungen am Stützrahmen 50 festgelegt, von denen zur Illustration die Klettverschlüsse 12 in Figur 1 dargestellt sind.

Der Stützrahmen 50 ist unterteilt in insgesamt drei gegeneinander verschwenkbare benachbarte Rahmenabschnitte 16, 18 und 20. Der der Antriebseinrichtung 1, 2 am nächsten benachbarte Rahmenabschnitt 16 weist zwei parallel zur Fortbewegungsrichtung der Abziehvorrichtung verlaufende voneinander beabstandete erste Rahmenprofile 52, 53 auf. Letztere sind über einen dem Gehäuse 8 benachbarten Verbindungsabschnitt, der eine Schwenkachse 24 des Rahmenabschnitts 16 zum Gehäuse 8 vorgibt, und ein erstes Verbindungsprofil 54 miteinander verbunden. Dieser Verbindungsabschnitt und das Verbindungsprofil 54 sind rechtwinklig zu den ersten Rahmenprofilen 52, 53 angeordnet und erstrecken sich praktisch über die gesamte Netzbreite.

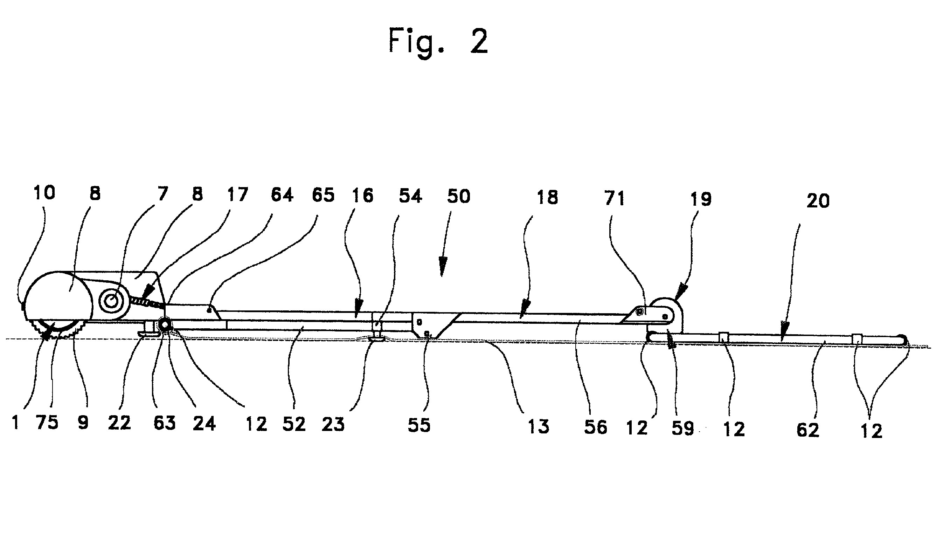

Der erste Rahmenabschnitt 16 ist über ein erstes Schwenkgelenk 63 (Schwenkachse 24) mit dem Gehäuse 8 verbunden (vgl. Fig. 2).

Über ein zweites Schwenkgelenk 55 (vgl. Figuren 2, 4 und 5) sind die ersten Rahmenprofile 52, 53 des Rahmenabschnitts 16 jeweils mit ebenfalls parallel zur Fortbewegungsrichtung verlaufenden zweiten Rahmenprofilen 56, 57 des zweiten Rahmenabschnitts 18 verbunden.

Über ein drittes Schwenkgelenk 59 sind die zweiten Rahmenprofile 56, 57 jeweils mit dritten Rahmenprofilen 60, 61 des dritten Rahmenabschnitts 20 verbunden, die sich ebenfalls in Fortbewegungsrichtung erstrecken. Die dritten Rahmenprofile 60, 61 sind über einen Verbindungsrahmen 62, der sich in der Netzebene erstreckt und als im wesentlichen rechteckig geschlossen umlaufendes Verbindungsprofil ausgeführt ist, miteinander verbunden. Der Verbindungsrahmen 62 erstreckt sich ebenfalls über fast die gesamte Breite des Netzes 13.

In der Verlängerung der ersten Rahmenprofile 52, 53 des ersten Rahmenabschnitts 16 sind an dem Gehäuse 8 zwei erste Zugkörper 17 angelenkt, die Teil eines Verstellmechanismus sind, mit dem die Abzieheinrichtung zwischen der in Figur 1 dargestellten Abziehposition und einer in Figur 6 dargestellten Parkposition, in der der Stützrahmen 50 zusammengeklappt ist, verstellt werden kann.

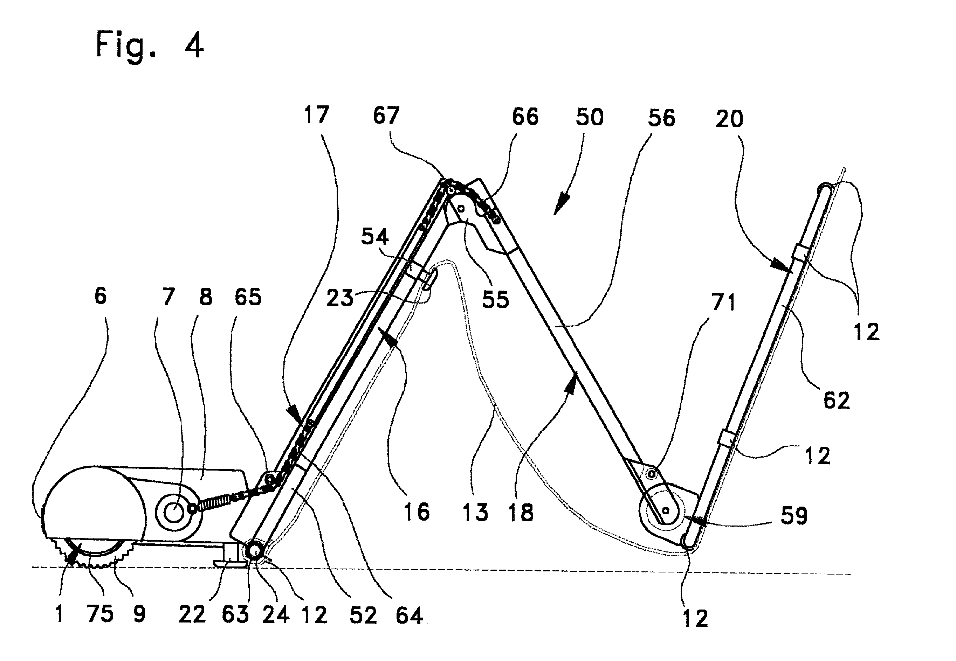

Der Aufbau der ersten Zugkörper 17 wird nachfolgend in Zusammenhang mit Figur 4 anhand des dort sichtbaren Zugkörpers 17 beschrieben. Der andere erste Zugkörper 17 ist analog zu diesem aufgebaut.

Vom gehäuseseitigen Anlenkpunkt aus weist der ersten Zugkörper 17 zunächst eine kurze Zugfeder auf, der im Bereich des ersten Schwenkgelenks 63 in einen ersten als Gliederkette ausgeführten Kettenabschnitt 64 übergeht. Die Zugfeder dient in der Abziehposition dazu, die Rahmenabschnitte 18 und 20 horizontal fluchtend zum Rahmenabschnitt 16 zu halten und ist in dieser Position vorgespannt. Mit dieser Zugfeder können Toleranzen innerhalb des Verstellmechanismus für die Abzieheinrichtung, insbesondere Toleranzen der Rahmenabschnitte 16, 18, 20, ausgeglichen werden.

Der Kettenabschnitt 64 wird von einem ersten Umlenkelement 65, welches am ersten Rahmenprofil 52 festgelegt ist, in eine zum ersten Rahmenprofil 52 parallele Richtung umgelenkt. Nach dem ersten Umlenkelement 65 geht der erste Kettenabschnitt 64 in einen sich parallel zum ersten Rahmenprofil 52 erstreckenden Zugstangenabschnitt über. Im Bereich des zweiten Schwenkgelenks 55 geht dieser Zugstangenabschnitt in einen zweiten Kettenabschnitt 66 über, der von einem am ersten Rahmenprofil 52 festgelegten zweiten Umlenkelement 67 derart umgelenkt wird, daß er nach dem zweiten Umlenkelement 67 im wesentlichen parallel zum zweiten Rahmenprofil 56 des zweiten Rahmenabschnitts 18 verläuft. Dort ist das Ende des zweiten Kettenabschnitts 66 am zweiten Rahmenprofil 56 angelenkt.

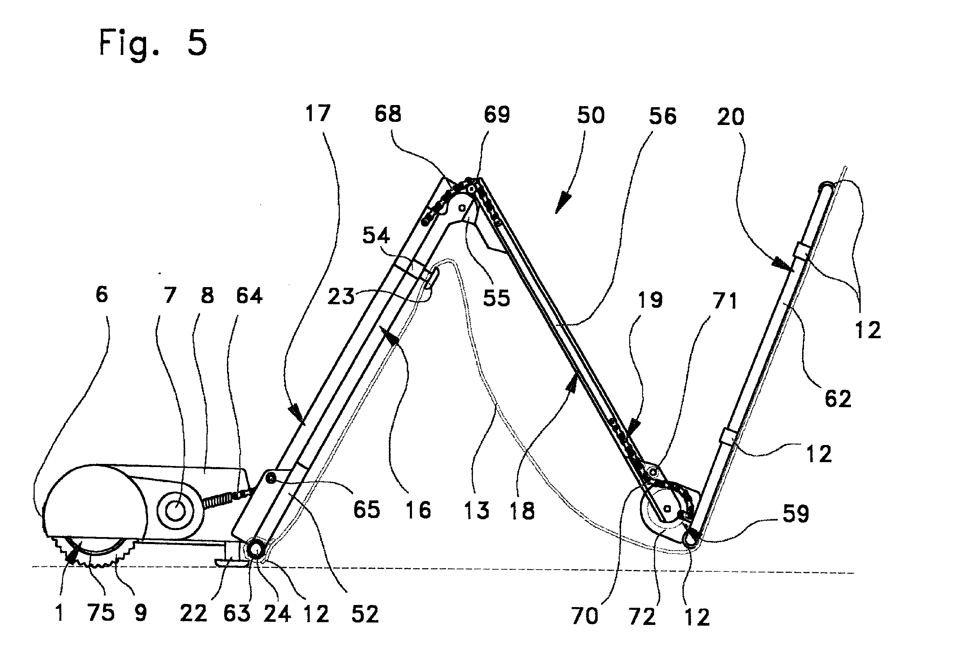

Zweite Zugkörper 19, die den ersten Rahmenabschnitt 16 über den zweiten Rahmenabschnitt 18 mit dem dritten Rahmenabschnitt 20 verbinden, sind ebenfalls Teil des Verstellmechanismus zum Verstellen der Abzieheinrichtung zwischen der Abzieh- und der Parkposition. Die beiden zweiten Zugkörper 19 sind im wesentlichen längs der beiden zweiten Rahmenprofile 56, 57 des zweiten Rahmenabschnitts 18 angeordnet. Nachfolgend wird unter Bezugnahme auf Figur 5 der zweite Zugkörper 19 beschrieben, der im wesentlichen längs des zweiten Rahmenprofils 56 angeordnet ist. Der andere zweite Zugkörper 19 ist analog zu diesem aufgebaut.

Der zweite Zugkörper 19 ist an einem Ende am ersten Rahmenprofil 52 des ersten Rahmenabschnitts 16 angelenkt und ist dort zunächst als erster Kettenabschnitt 68 ausgeführt, der mittels eines ersten Umlenkelements 69 in Richtung des zweiten Rahmenprofils 56 des zweiten Rahmenabschnitts 18 umgelenkt wird. Nach dem ersten Umlenkelement 69 geht der erste Kettenabschnitt 68 in einen Zugstangenabschnitt über, der parallel zum zweiten Rahmenprofil 56 verläuft. An den Zugstangenabschnitt schließt sich ein zweiter Kettenabschnitt 70 im Bereich des dritten Schwenkgelenks 59 an. Dort wird der zweite Kettenabschnitt 70 zunächst von einem zweiten Umlenkelement 71, welches am zweiten Rahmenprofil 56 festgelegt ist, umgelenkt und liegt danach auf einem Umfangsabschnitt einer Schwenkrolle 72 an, die koaxial zur Schwenkachse des dritten Schwenkgelenks 59 angeordnet ist.

Alternativ zu Zugkörpern mit Kettenabschnitten können auch Zugseile bzw. Zugseilabschnitte vorgesehen sein. Ein hierfür geeignetes Material ist Nylon. Auch Drahtseile können eingesetzt sein.

Alternativ zu den beschriebenen drei Rahmenabschnitten 16, 18 und 20 kann auch eine andere Anzahl von Rahmenabschnitten vorgesehen sein.

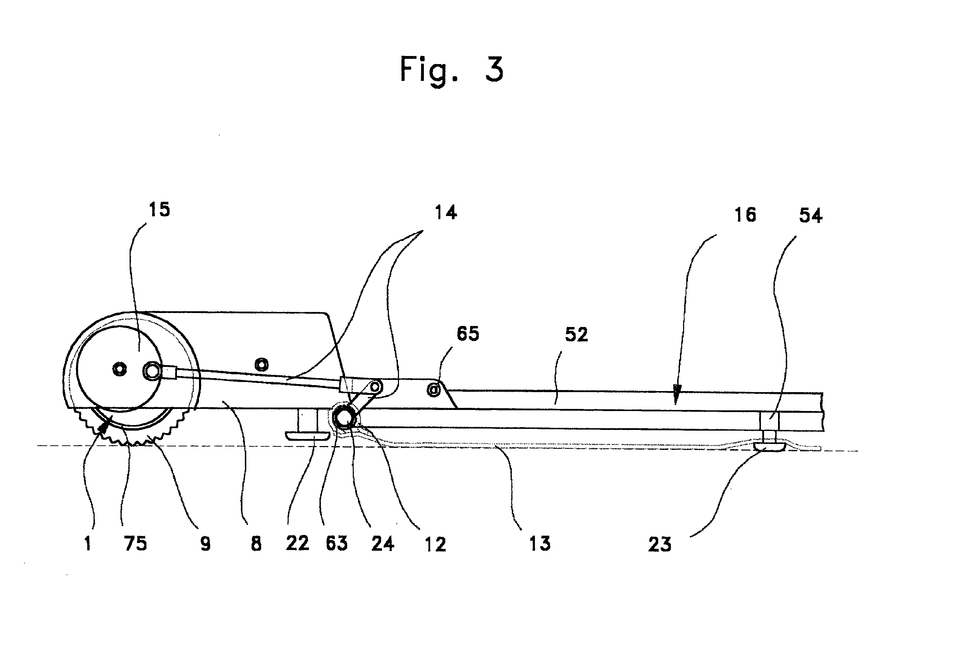

Zum Verstellmechanismus, der die Verstellung der Abzieheinrichtung zwischen der Abzieh- und der Parkposition bewerkstelligt, gehört ferner eine Schwenkeinrichtung, mit der ein motorisiertes Verschwenken des Stützrahmens 50 zwischen diesen Positionen erfolgt. Diese Schwenkeinrichtung wird nachfolgend bezugnehmend auf Figur 3 beschrieben:

Sie weist einen als Elektromotor ausgeführten Schwenkantrieb auf, mit dem die Antriebsscheibe 15 um eine horizontale Achse senkrecht zur Fortbewegungsrichtung der Abziehvorrichtung gedreht werden kann. Am äußeren Umfangsbereich der Antriebsscheibe 15 ist eine erste Antriebsstange eines Antriebsgestänges 14 angelenkt. Die erste Antriebsstange 14 ist über ein Gelenk mit einer zweiten, als Hebel dienenden Antriebsstange verbunden, die wiederum derart starr mit dem die Schwenkachse 24 vorgebenden Verbindungsabschnitt verbunden ist, daß er gemeinsam mit diesem Verbindungsabschnitt um das erste Schwenkgelenk 63 durch Betätigung des Schwenkantriebs verschwenkbar ist.

An der Unterseite des Gehäuses 8 sind Haltestützen 22 vorgesehen, die wie die Halteeinrichtungen 23 geformt sind und in der in Figur 3 dargestellten Abziehposition vom Boden beabstandet sind.

Nachfolgend wird bezugnehmend auf die Figuren 3 bis 6 die Funktion des Verstellmechanismus erläutert:

Wird ausgehend von der Abziehposition in Figur 3 die Antriebsscheibe 15 durch Betätigung des Elektromotors für den Schwenkantrieb gedreht, wird auf die erste Antriebsstange des Antriebsgestänges 14 eine Zugwirkung ausgeübt. Bedingt durch die Umlenkung über die als Hebel dienende zweite Antriebsstange des Antriebsgestänges 14 reicht der über die Anlenkung an der Antriebsstange 15 erzeugbare Bewegungshub aus, um ein Verschwenken der zweiten Antriebsstange sowie des drehfest über den die Schwenkachse 24 vorgebenden Verbindungsabschnitt mit diesem verbundenen ersten Rahmenabschnitt 16 um 90° zu bewerkstelligen. Die Figuren 4 und 5 zeigen hierbei eine Zwischenstellung der Abzieheinrichtung zwischen der Abziehposition und der Parkposition. Das Verschwenken des ersten Rahmenabschnitts 16 um das erste Schwenkgelenk 63 bedingt ein gleichzeitiges Zusammenklappen des Stützrahmens 50 um das zweite Schwenkgelenk 55 zwischen dem ersten Rahmenabschnitt 16 und dem zweiten Rahmenabschnitt 18 sowie um das dritte Schwenkgelenk 59 zwischen dem zweiten Rahmenabschnitt 18 und dem dritten Rahmenabschnitt 20. Gesteuert durch die beiden Zugkörper 17 und 19 klappt dabei der zweite Rahmenabschnitt 18 nach unten und der dritte Rahmenabschnitt 20 nach oben. Die Längen der Zugkörper 17 und 19 sind dabei so gewählt, daß dann, wenn der erste Rahmenabschnitt 16 in der Parkposition in eine senkrechte Stellung gebracht ist, die beiden Rahmenabschnitte 18, 20 vollständig eingeklappt sind, also mit dem Rahmenabschnitt 16 eine kompakte Einheit bilden, wie in Figur 6 dargestellt.

Die am ersten Rahmenabschnitt 16 angebrachte Halteeinrichtung 23 verhindert dabei, daß beim Einklappen des Stützrahmens 50 das Netz 13 so weit durchhängt, daß es mit dem Boden in Berührung kommt.

In der Abziehposition liegt der Stützrahmen 50 über die Halteeinrichtungen 23 am Boden an. Werden die Halteeinrichtungen 23 beim Einklappen des Stützrahmens 50 vom Boden abgehoben, senkt sich das Gehäuse 8 der Abziehvorrichtung so weit ab, bis es von den Haltestützen 22 abgestützt wird.

Die Schwenkbewegung des Rahmenabschnitts 20 von der Parkposition in die Abziehposition wird durch das gegenüber der Schwenkachse des Schwenkgelenks 59 beabstandet angeordnete und damit ein Drehmoment erzeugende Eigengewicht des Rahmenabschnitts 20 hervorgerufen, gegen das der zweite Zugkörper 19 beim Einklappen des Stützrahmens 50 in die Parkposition Arbeit verrichtet. Beim Ausklappen in die Abziehposition wird der Rahmenabschnitt 20 durch sein Eigengewicht weg vom Rahmenabschnitt 18 gezogen.

In Figur 6 ist die Abziehvorrichtung in einer Ladeposition gezeigt, in der sie zum Laden der Batterie 3 an eine Ladestation angeschlossen ist. Letztere steht mit der Abziehvorrichtung über Ladestifte, die in die Ladekontakte 10 eingreifen, in elektrischem Kontakt. Die Ladestifte stehen elektrisch mit einem Transformator zur Spannungsversorgung in Verbindung, der in einem Gehäuse 11 der Ladestation untergebracht ist. Der Transformator wird von einer nicht dargestellten Spannungsquelle versorgt.

Bei einer alternativen Ausführungsform der Ladestation weist diese eine abschließbare Verriegelungseinrichtung auf, die in der Ladeposition der Abziehvorrichtung verhindert, das letztere von der Ladestation getrennt werden kann.

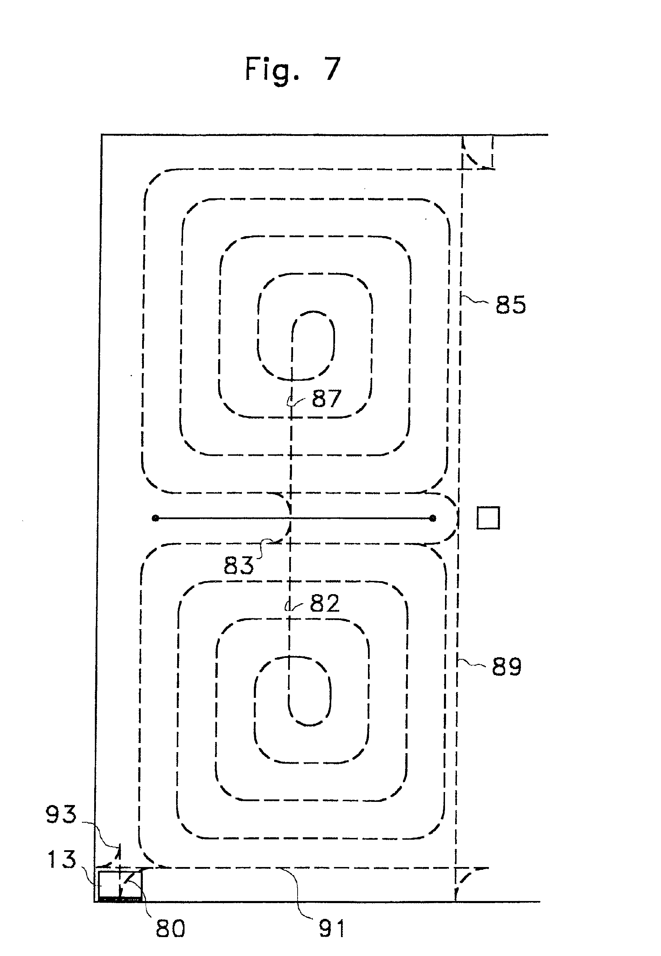

Das Abziehen eines Tennisplatzes mit der vorstehend beschriebenen Abziehvorrichtung wird nachfolgend anhand von Figur 7 beschrieben:

In Figur 7 ist die Abziehvorrichtung in der dargestellten Aufsicht eines Tennisplatzes zunächst links unten angeordnet. Sie ist schematisch durch einen durchgezogenen Umriß des Netzes 13 dargestellt. In dieser Stellung ist die Abziehvorrichtung unmittelbar nach dem Verlassen der Lade- bzw. Parkposition, wenn die zunächst zusammengeklappten Rahmenabschnitte 16-20 schon auf den Boden abgesenkt sind, sich die Abziehvorrichtung jedoch noch nicht fortbewegt hat.

Der Abziehvorgang erfolgt gesteuert durch ein in der Steuerung 4 ablaufendes Abziehweg-Programm, das entweder werkseitig vorprogrammiert ist oder vom Benutzer an die Gegebenheiten des Tennisplatzes angepaßt werden kann.

Der Start des Abziehvorgangs kann entweder manuell durch Betätigung eines entsprechenden Startknopfs oder automatisch, z. B. mittels einer Zeitschalteinrichtung ausgelöst werden. Zu Beginn erfolgt eine Initialisierung der Position der Abziehvorrichtung, d. h. es wird mit dem Kompaß 5 eine Referenzrichtung bestimmt und ein Wegstreckenzähler der Wegstreckenmeßeinrichtung wird auf 0 gesetzt.

Am Anfang des Abziehvorgangs fährt die Abziehvorrichtung zunächst eine kurze Wegstrecke 80 rückwärts und fährt dabei eine 90°-Kurve nach rechts. Da das Netz 13 durch die Halteeinrichtung (z. B. Klettverschlüsse 12) gehalten ist, ist während der Rückwärtsfahrt sichergestellt, daß das Netz 13 nicht unter die Antriebseinrichtungen 1, 2 bzw. das Gehäuse 8 gezogen wird.

Die Programmbefehle zur Steuerung dieser ersten Wegstrecke 80 haben folgenden prinzipiellen Aufbau:
- Rückwärtsfahrt, bis der Wegstreckenzähler einen Vorgabewert, z. B. -2 m, anzeigt;
- dabei Richtungswechsel mit einem vorgegebenen Kurvenradius im Uhrzeigersinn, bis der Kompaß einen Vorgabewert "Referenzrichtung + 90°" anzeigt.

Die Fahrtrichtung wird durch die Steuerung 4 durch entsprechende unabhängige Drehzahlansteuerung der Antriebseinrichtung 1, 2 vorgegeben.

Ausgehend von der Startpostition, in der die Abziehvorrichtung nach Durchlaufen der Wegstrecke 80 ist, wird nun zunächst die in Figur 7 untere Hälfte des Tennisplatzes in Form einer Spirale mit sich verringerndem Radius abgefahren und somit abgezogen. Hierbei werden aufeinanderfolgende gerade Wegstrecken durchfahren, zwischen denen jeweils eine 90°-Rechskurve durchfahren wird. Wegstreckenund Richtungsmessung übernehmen hierbei die Wegstreckenmeßeinrichtung 21 sowie der Kompaß 5. Mit Hilfe der Ultraschall-Sensoren 6, 7 ist ein zusätzlicher Abgleich des programmierten Abziehwegs möglich, in dem beispielsweise der Abstand zum Netz des Tennisplatzes bzw. zu äußeren Begrenzungen der Anlage gemessen wird.

Nach Durchlaufen der ersten Spirale in der in Figur 7 unteren Hälfte des Tennisplatzes fährt die Abziehvorrichtung längs einer Wegstrecke 82 auf das Netz des Tennisplatzes zu. Im Prinzip kann, eine entsprechende Genauigkeit der Positionsbestimmung durch die Richtungs- und Wegstrekkenmessung vorausgesetzt, auch die Länge der Wegstrecke 82 vorgegeben sein. In der Praxis wird die Wegstrecke 82 zum Netz der Tennisanlage hin zum Korrigieren des Fahrwegs genutzt. Hierbei wird mit der Wegstreckenmeßeinrichtung 21 die Länge der Wegstrecke 82 gemessen, bis mittels der Ultraschall-Sensoren 6 festgestellt wird, daß die Abziehvorrichtung vor dem Netz der Tennisanlage steht. Der zurückgelegte Ist-Wert der Wegstrecke 82 wird dann mit einem vorprogrammierten Soll-Wert berechnet. Eine ggf. vorliegende Differenz kann zur Korrektur der entsprechenden Vorgabewerte der nachfolgenden Wegstrecken herangezogen werden.

Nach Durchlaufen der Wegstrecke 82 setzt die Abziehvorrichtung eine kurze Wegstrecke 83 analog zur Wegstrecke 80 mit gleichzeitiger 90°-Rechtskurve zurück. Anschließend fährt die Abziehvorrichtung wieder vorwärts am Netz der Tennisanlage entlang und umfährt dieses dann in einer 90°-Linkskurve. Nach dieser Kurve wird eine Wegstrecke 85 durchfahren bis hin zur in Figur 7 oberen Begrenzung der Tennisanlage. Analog zur Wegstrecke 82 kann auch die Wegstrecke 85 zum Korrigieren des Fahrwegs eingesetzt werden. Nach der Wegstrecke 85 erfolgt wieder ein Zurücksetzen analog zur Wegstrecke 80. Anschließend wird die in Figur 7 obere Hälfte des Tennisplatzes in einem Spiralfahrweg analog zur unteren Hälfte durchlaufen. Analog zur Wegstrecke 82 schließt sich hier eine Wegstrecke 87 in Richtung des Netzes der Tennisanlage an. Es folgt wieder ein Zurücksetzen (analog zur Wegstrecke 83) und eine Wegstrecke längs des Tennisnetzes in der oberen Hälfte des Tennisplatzes, nach der das Netz der Tennisanlage in einer 90°-Rechtskurve umfahren wird. Es folgt eine Wegstrecke 89 hin zur unteren Begrenzung der Tennisanlage, gefolgt von einem Zurücksetzen (analog zur Wegstrecke 80) und einer Wegstrecke 91 bis hin zur linken Begrenzung der Tennisanlage. Nach einem weiteren Zurücksetzen mit 90°-Rechtskurve schließt eine kurze gerade Wegstrecke 93 zurück zur Lage- bzw. Parkposition an.

Alle Wegstrecken in Richtung eines feststehenden Hindernisses der Tennisanlage können zum Nachjustieren des Fahrwegs analog zum in Zusammenhang mit der Wegstrecke 82 Ausgeführten eingesetzt werden.

Mit Hilfe der Ultraschall-Sensoren 6, 7 kann zudem sichergestellt werden, daß die Abziehvorrichtung nicht mit Personen oder Gegenständen kollidiert. Bei einer entsprechenden Ausführungsform geben die Ultraschall-Sensoren 6, 7 ein Stop-Signal an die Steuerung 4, wenn sich die Abziehvorrichtung einem Gegenstand bis auf einen vorgegebenen Mindestabstand genähert hat.

Über die Meßgrößen "Richtung" und "Wegstrecke" ist, ausgehend von der Park- bzw. Ladeposition der Abziehvorrichtung ihre Position auf der Tennisanlage zu jeder Zeit eindeutig bestimmt.

Bei einer alternativen Ausführungsform der Abziehvorrichtung ist ein Stützrahmen mit nur einem Rahmenabschnitt mit einem entsprechend kürzeren Abziehkörper in Form einer Abziehmatte vorgesehen. Eine derartige Abziehvorrichtung kann z. B. für Tennishallen eingesetzt werden, da bei dem dort eingesetzen Granulat nur eine geringere Schleifwirkung der Abzieheinrichtung erforderlich ist. Bei einer derartigen Abziehvorrichtung entfällt der Klappmechanismus und, falls genügend Platz zur Verfügung steht, auch die Schwenkeinrichtung.

Der im Zusammenhang mit der Figur 7 dargestellte Fahrweg ist nur eine von vielen denkbaren Möglichkeiten. Es ist klar, daß auch andere Wege, insbesondere solche, zwischen deren Wegstrecken nicht ausschließlich 90°-Winkel vorliegen, zum Einsatz kommen können.

## Patentansprüche

1. Abziehvorrichtung für den Boden einer Tennisanlage
mit einer Abzieheinrichtung (13, 50) mit einem während des Abziehvorgangs über den Boden schleifenden Abziehkörper (13), mit einer Antriebseinrichtung (1, 2), die zum Fortbewegen der Abziehvorrichtung auf mit dem Boden zusammenwirkende Fortbewegungsmittel (75, 9) wirkt, wobei die Antriebseinrichtung (1, 2) mit einer Steuereinrichtung (4) zur Vorgabe des Abziehwegs zusammenarbeitet,
**dadurch gekennzeichnet, daß**
die Fortbewegungsmittel (75, 9) mindestens zwei quer zur Fortbewegungsrichtung versetzt angeordnete, mit unterschiedlicher Drehzahl antreibbare Räder (75, 9) aufweisen.

2. Abziehvorrichtung nach Anspruch 1, **gekennzeichnet**
**durch** eine mit der Steuereinrichtung (4) zusammenarbeitende Positionsbestimmungseinrichtung, die eine Richtungsbestimmungseinrichtung (5) für die Fortbewegungsrichtung der Abziehvorrichtung aufweist.

3. Abziehvorrichtung nach Anspruch 2, **dadurch gekennzeichnet, daß** die Positionsbestimmungseinrichtung ferner eine mit einer sich während dem Fortbewegen drehenden Komponente zusammenarbeitende Wegstreckenmeßeinrichtung (21) aufweist.

4. Abziehvorrichtung nach Anspruch 3, **dadurch gekennzeichnet, daß** die Wegstreckenmeßeinrichtung (21) mindestens einen induktiven Impulsgeber aufweist.

5. Abziehvorrichtung nach Anspruch 3 oder 4, **dadurch**
**gekennzeichnet, daß** die sich während dem Fortbewegen drehende Komponente der Wegstreckenmeßeinrichtung (21) ein nicht angetriebenes Laufrad ist.

6. Abziehvorrichtung nach einem der Ansprüche 3 bis 5,
**dadurch gekennzeichnet, daß** die Wegstreckenmeßeinrichtung (21) zwischen den Rädern (75, 9), vorzugsweise mittig zwischen diesen, angeordnet ist.

7. Abziehvorrichtung nach Anspruch 3 oder 4, **dadurch**
**gekennzeichnet, daß** die sich während dem Fortbewegen drehende Komponente der Wegstreckenmeßeinrichtung (21) ein Bauteil der Antriebseinrichtung (1, 2) und/oder der Fortbewegungsmittel (75, 9) ist.

8. Abziehvorrichtung nach Anspruch 7, **dadurch gekennzeichnet, daß** die Wegstreckenmeßeinrichtung derart ausgeführt ist, daß sie Signale, die den Umdrehungen von mindestens zwei Rädern (75, 9) entsprechen, zur Wegstrekkenmmessung verarbeitet.

9. Abziehvorrichtung nach einem der vorhergehenden
Ansprüche, **dadurch gekennzeichnet, daß** die Antriebseinrichtung (1, 2) mindestens eine drehfest angeordnete Welle aufweist, um die sich ein Läufer (75) dreht.

10. Abziehvorrichtung nach einem der vorhergehenden
Ansprüche, **dadurch gekennzeichnet, daß** die Räder (75, 9) separate Antriebseinrichtungen (1, 2) aufweisen.

11. Abziehvorrichtung nach einem der vorhergehenden
Ansprüche, **gekennzeichnet durch** Abstandssensoren (6, 7) zur Detektion von Hindernissen bzw. von stationären Gegenständen.

12. Abziehvorrichtung nach Anspruch 11, **dadurch gekennzeichnet, daß** die Abstandssensoren (6, 7) mit der Steuereinrichtung (4) in Signalverbindung stehen.

13. Abziehvorrichtung nach Anspruch 11 oder 12, **dadurch**
**gekennzeichnet, daß** die Abstandssensoren als Ultraschall-Sensoren (6, 7) ausgeführt sind.

14. Abziehvorrichtung nach einem der Ansprüche 2 bis 13,
**dadurch gekennzeichnet, daß** die Richtungsbestimmungseinrichtung als Faserkreisel (5) ausgeführt ist.

15. Abziehvorrichtung nach einem der Ansprüche 2 bis 13,
**dadurch gekennzeichnet, daß** die Richtungsbestimmungseinrichtung als Drehratensensor ausgeführt ist.

16. Abziehvorrichtung nach einem der Ansprüche 2 bis 13,
**dadurch gekennzeichnet, daß** die Richtungsbestimmungseinrichtung als mikromechanischer Kreisel ausgeführt ist.

17. Abziehvorrichtung nach Anspruch 14, **gekennzeichnet**
**durch** eine Verriegelungseinrichtung der Abziehvorrichtung in einer Parkposition.

18. Abziehvorrichtung nach einem der vorhergehenden
Ansprüche, **dadurch gekennzeichnet, daß** der Abziehkörper (13) aus einem flexiblen Material besteht und mit einem Stützrahmen (50) verbunden ist.

19. Abziehvorrichtung nach Anspruch 19, **dadurch gekennzeichnet, daß** der Stützrahmen (50) eine Halteeinrichtung (23) für den Abziehkörper (13) im Bereich des von der Antriebseinrichtung (1, 2) entfernten Endbereichs des Stützrahmens (50) bzw. eines Abschnitts (16, 18, 20) hiervon aufweist.

20. Abziehvorrichtung nach Anspruch 19, **dadurch gekennzeichnet, daß** die Halteeinrichtung (23) so ausgeführt ist, daß sie gleichzeitig als Stütze in der Abziehposition dient.

21. Abziehvorrichtung nach einem der vorhergehenden
Ansprüche, **dadurch gekennzeichnet, daß** die Antriebseinrichtung (1, 2) mindestens zwei Elektromotoren aufweist.

22. Abziehvorrichtung nach Anspruch 21, **gekennzeichnet durch** eine Batterie (3) zum Speisen der Elektromotoren.

23. Ladestation für eine Abziehvorrichtung nach Anspruch 22.

24. Ladestation nach Anspruch 23, **gekennzeichnet durch**
eine Verriegelungseinrichtung für die Abziehvorrichtung in einer Ladeposition.
